# EUROPEAN PATENT APPLICATION

(11) **EP 4 733 101 A1**
(43) Date of publication of application: **29.04.2026**
(21) Application number: 23942619.0
(22) Date of filing: 26.06.2023
(51) Int. Cl.: B60K 1/00, B60K 5/12

(54) **ELECTRIC VEHICLE**

(71) Applicant: Nissan Motor Co., Ltd., Yokohama-shi, Kanagawa 221-0023 (JP)
(72) Inventor: KURITA, Takashi, Atsugi-shi, Kanagawa 243-0123 (JP)
(74) Representative: Global IP Europe Patentanwaltskanzlei
(86) International application number: PCT/JP2023/023632
(87) International publication number: WO 2025/004150

(57) **Abstract**

An electric vehicle in which an electric unit including an electric motor and a case housing the electric motor is mounted and fixed to a vehicle body at a plurality of fixing points is provided.. In the electric vehicle, the fixing points include at least a first fixing point set on a side member positioned on a side surface side of the electric vehicle relative to the electric unit, and a second fixing point set on a suspension member positioned on a rear side of the electric vehicle relative to the electric unit. The case is provided with a reinforcing portion having enhanced rigidity at a part on a rear side of the electric vehicle relative to a straight line connecting the first fixing point and the second fixing point in a top view of the electric vehicle.

## Description

### TECHNICAL FIELD

The present invention relates to an electric vehicle.

### BACKGROUND ART

An electric vehicle is equipped with an electric unit including a component with a built-in high voltage circuit, and an aluminum housing is usually used as a case of the electric unit. However, since the aluminum housing does not have high strength, the case of the electric unit may be broken during a collision or the like of the vehicle. When the case of the electric unit is broken, abnormal ignition (TI) or electric shock (ES) may occur.

On the other hand, a protector may be attached to the case of the electric unit to increase the strength of the case, but if a space is narrow, it may not be possible to install a protector.

JP2018-16247A discloses an electric vehicle in which a motor case is provided with a protruding portion protruding toward a front side of the vehicle. In this electric vehicle, damage to the motor case during a collision of the vehicle is suppressed by the protruding portion provided on the motor case.

### SUMMARY OF INVENTION

However, even in the electric vehicle described in JP2018-16247A, a space for providing the protruding portion is required, and the protruding portion cannot be provided at a part requiring a vehicle body crushing stroke or a part requiring a clearance. Therefore, damage and breakage of the case of the motor (electric unit) may not be sufficiently suppressed.

The present invention has been made in view of the above problem, and an object of the present invention is to provide an electric vehicle capable of suppressing damage and breakage of a case of an electric unit during a collision of the vehicle.

One aspect of the present invention provides an electric vehicle in which an electric unit including an electric motor and a case housing the electric motor is mounted and fixed to a vehicle body at a plurality of fixing points. In the electric vehicle, the fixing points include at least a first fixing point set on a side member positioned on a side surface side of the electric vehicle relative to the electric unit, and a second fixing point set on a suspension member positioned on a rear side of the electric vehicle relative to the electric unit. The case is provided with a reinforcing portion having enhanced rigidity at a part on a rear side of the electric vehicle relative to a straight line connecting the first fixing point and the second fixing point in a top view of the electric vehicle.

### BRIEF DESCRIPTION OF DRAWINGS

[FIG. 1] FIG. 1 is a schematic configuration diagram illustrating a main configuration of an electric unit mounted on an electric vehicle according to an embodiment of the present invention.
[FIG. 2] FIG. 2 is a schematic configuration diagram of an electric power train.
[FIG. 3] FIG. 3 is a diagram illustrating an installation position of a reinforcing portion.
[FIG. 4] FIG. 4 is a top view of a first mount fixing portion.
[FIG. 5] FIG. 5 is a top view of a second mount fixing portion.
[FIG. 6] FIG. 6 is a diagram illustrating a positional relation between a side member and the reinforcing portion.
[FIG. 7] FIG. 7 is a diagram illustrating an inner side of a rear cover.
[FIG. 8] FIG. 8 is a partially enlarged view of the electric unit before the rear cover is fastened.
[FIG. 9] FIG. 9 is a partially enlarged view of the electric unit.
[FIG. 10] FIG. 10 is a cross-sectional view of a periphery of a fastening portion between an inner housing and an outer housing.

### DESCRIPTION OF EMBODIMENTS

Hereinafter, an embodiment of the present invention will be described with reference to the drawings and the like.

### [Embodiment]

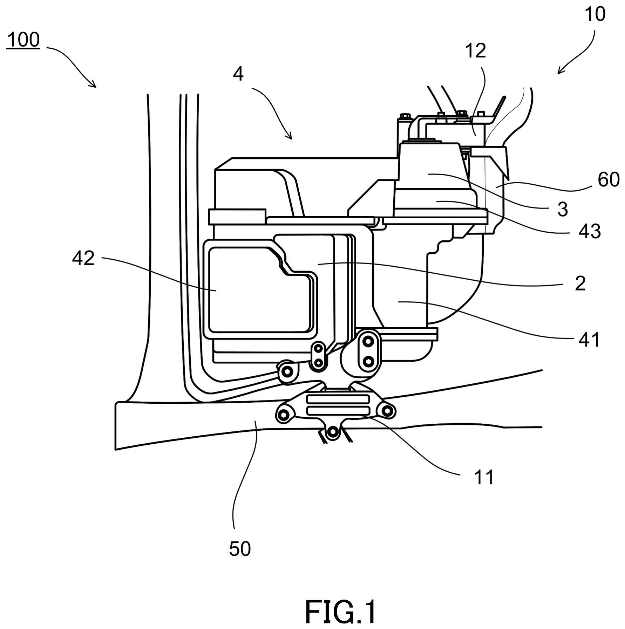

FIG. 1 is a schematic configuration diagram illustrating a main configuration of an electric unit 10 mounted on an electric vehicle (hereinafter, also referred to as a vehicle) 100 according to an embodiment of the present invention, and is a diagram as viewed from an upper surface of the vehicle 100. Note that a left side of FIG. 1 is a front direction of the vehicle 100. In the present embodiment, the electric vehicle 100 is a so-called series hybrid vehicle including a generator (power generation motor) 22 that is driven by an engine (not illustrated) to generate electric power and an electric motor (drive motor) 21 that is driven by electric power from a battery (not illustrated) to cause the electric vehicle 100 to travel. However, the present invention is not limited thereto, and the vehicle may be another hybrid vehicle, or may be, for example, an electric automobile that does not include an engine or a generator (power generation motor).

As illustrated in FIG. 1, the electric unit 10 includes an electric power train (hereinafter, referred to as an ePT) 2, a gear box 3, and a case 4 that houses the ePT 2 and the gear box 3. The electric unit 10 is fixed to a vehicle body of the vehicle 100 via the first mount fixing portion 11 and the second mount fixing portion 12.

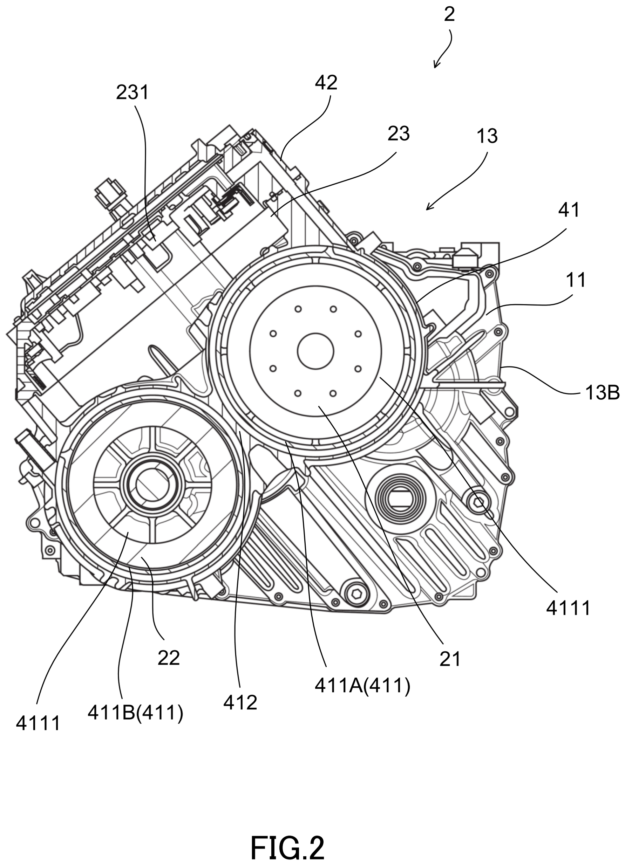

FIG. 2 is a schematic diagram of the ePT 2, and is a cross-sectional view of the ePT 2 as viewed from a vehicle width direction of the electric vehicle 100.

As illustrated in FIG. 2, the ePT 2 includes the electric motor (electric motor, drive motor) 21, the generator 22, and an inverter (power conversion device) 23 disposed above the electric motor 21 and the generator 22. The ePT 2 is supplied with the electric power from the battery (not illustrated) and drives the electric motor 21 to cause the electric vehicle 100 to travel.

The electric motor 21 is an electric motor (drive motor) that is driven by receiving supply of the electric power from the battery (not illustrated) and rotates drive wheels via an axle of the electric vehicle 100, and is, for example, a three-phase motor. The electric motor 21 is rotated by the drive wheels during deceleration and the like of the electric vehicle 100, and generates regenerative electric power. That is, the electric motor 21 is a rotary electric machine that also functions as a generator. The generator 22 is a power generation motor driven by an engine (not illustrated) to generate electric power, and is, for example, a three-phase motor. The electric motor 21 and the generator 22 are housed in a motor housing 41 constituting a part of the case 4 described below.

The inverter 23 includes electrical components 231 such as a power module and a capacitor, and is provided with a built-in high voltage circuit. The inverter 23 is housed in a lid-like inverter housing 42 constituting a part of the case 4 described below, and is disposed on the motor housing 41 in a state of being inclined downward toward a front side of the electric vehicle 100. The electrical components 231 of the inverter 23 are arranged on an inner surface of the inverter housing 42. The inverter 23 is electrically connected to the electric motor 21 and the generator 22, converts DC electric power output from the battery into AC electric power, supplies the AC electric power to the electric motor 21, and drives the electric motor 21. The inverter 23 converts regenerative electric power of the electric motor (rotary electric machine) 21 and the electric power generated by the generator 22 from AC electric power to DC electric power and supplies the DC electric power to the battery to charge the battery.

The gear box 3 (FIG. 1) is a gear device including gear trains made of a plurality of gears, and includes a gear train that connects the drive wheels of the electric vehicle 100 and the electric motor (electric motor, drive motor) 21, a gear train that connects the engine and the generator 22, and the like. These gear trains are housed in a gear box housing 43 constituting a part of the case 4.

The case 4 is made of aluminum or the like and houses the ePT 2 and the gear box 3. The case 4 is constituted by integrating the motor housing 41 that houses the electric motor 21 and the generator 22, the inverter housing 42 that houses the inverter 23, and the gear box housing 43 that houses the gear trains of the gear box 3. Note that an engine (not illustrated) coupled to the gear box 3 is disposed at a position on a right side surface side of the vehicle 100 with respect to the electric unit 10, and the case 4 is integrated with the engine.

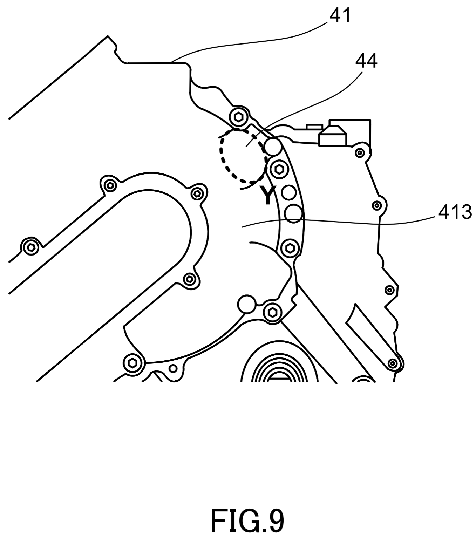

As illustrated in FIG. 2, the motor housing 41 includes an inner housing 411 that houses the electric motor 21 and the generator 22, an outer housing 412 that houses the inner housing 411 inside, and a rear cover 413 (see FIG. 9) that covers an opening 4111 of the inner housing 411. The inner housing 411 includes a cylindrical first inner housing 411A that houses the electric motor 21 and a cylindrical second inner housing 411B that houses the generator 22. The outer housing 412 includes two cylindrical housing portions arranged in parallel, and houses the first inner housing 411A and the second inner housing 411B in the housing portions respectively. The rear cover 413 is configured to cover the opening 4111 of the cylindrical inner housing 411 (411A, 411B), and is fastened to the outer housing 412 by a bolt or the like outside a peripheral edge of the inner housing 411 (411A, 411B). Note that when the electric vehicle 100 is an electric automobile that does not include the engine or the generator 22, the motor housing 41 includes one cylindrical inner housing 411, the outer housing 412 having one cylindrical housing portion, and the rear cover 413 that covers the opening 4111 of the inner housing 411.

The inverter housing 42 is shaped into a lid that opens toward a lower side, and is placed on the motor housing 41. The electrical components 231 of the inverter 23 are arranged on an inner surface of the inverter housing 42. A tip of an outer edge portion of the inverter housing 42 is formed into a flange shape and is fastened to the motor housing 41 by a bolt or the like.

The gear box housing 43 is formed into a cylindrical shape, and the gear trains of the gear box 3 are housed therein. The gear box housing 43 is coupled to the motor housing 41. A tip of an outer edge portion of the gear box housing 43 is formed into a flange shape and is fastened to the motor housing 41 by a bolt or the like.

The first mount fixing portion 11 is interposed between the electric motor 21 of the ePT 2 and a side member 50, and is configured by a mount member having one end fastened to the case 4 of the electric unit 10 by a bolt or the like and the other end fastened to the side member 50 by a bolt or the like. The side member 50 is formed of an iron plate or the like, and is positioned on a left side surface side of the vehicle 100 with respect to the electric unit 10 (hereinafter, also simply referred to as a left side surface side). The first mount fixing portion 11 mounts and fixes the electric unit 10 to the side member 50 positioned on the left side surface side of the vehicle 100 with respect to the electric unit 10.

The second mount fixing portion 12 is interposed between the gear box 3 and a suspension member 60, and is configured by a mount member having one end fastened to the case 4 of the electric unit 10 by a bolt or the like and the other end fastened to the suspension member 60 by a bolt or the like. For example, the suspension member 60 is configured by an iron plate or the like, and is configured to surround the electric unit 10 from four directions of front, rear, left, and right in a top view of the vehicle 100. The electric unit 10 is mounted and fixed to a rear part of the suspension member 60 by the second mount fixing portion 12 on the rear side of the vehicle 100 with respect to the electric unit 10 (hereinafter, also simply referred to as the rear side). Note that the suspension member 60 is not limited to the above configuration as long as the suspension member 60 has at least a part positioned on the rear side of the vehicle 100 with respect to the electric unit 10.

As described above, the electric unit 10 of the electric vehicle 100 is mounted and fixed to the side member 50 positioned on the left side surface side of the vehicle 100 with respect to the electric unit 10 and the suspension member 60 positioned on the rear side of the vehicle 100 with respect to the electric unit 10.

Note that as described above, the engine (not illustrated) is disposed at a position on the right side surface side of the vehicle 100 with respect to the electric unit 10, and the engine is mounted and fixed to the side member (not illustrated) positioned on a side opposite to the side member 50 (that is, on the right side surface side of the vehicle 100 with respect to the electric unit 10).

Incidentally, although an aluminum housing is usually used as the case of the electric unit similarly to the case 4 of the present embodiment, since the aluminum housing is not high in strength, the case of the electric unit may be damaged or broken (hereinafter, referred to as damaged or the like) during a collision or the like of the vehicle. When the case of the electric unit is damaged or the like, abnormal ignition (TI) or electric shock (ES) may occur. On the other hand, a protector may be attached to the case of the electric unit to increase the strength of the case, but if a space is narrow, it may not be possible to dispose a protector. That is, it is difficult to dispose a protector or the like at a part requiring a vehicle body crushing stroke or a part requiring a clearance. Therefore, damage to the case of the electric unit may not be sufficiently suppressed.

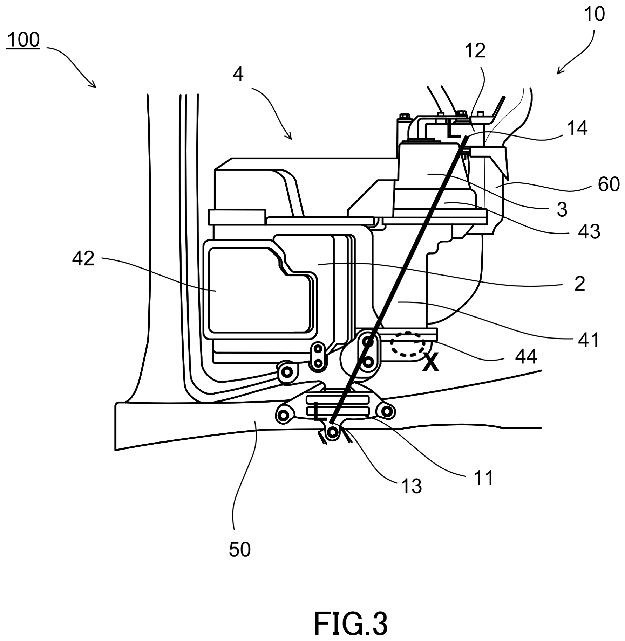

Therefore, in the present embodiment, with respect to a straight line L-L connecting a fixing point (hereinafter, referred to as a first fixing point) at which the electric unit 10 is mounted and fixed (fastened) to the side member 50 on the left side surface side and a fixing point (hereinafter, referred to as a second fixing point) at which the electric unit 10 is mounted and fixed (fastened) to the suspension member 60 on the rear side, a reinforcing portion 44 (see FIG. 3) having enhanced rigidity is provided at a part of the case 4 at a rear side of the vehicle 100 with respect to the straight line L-L (hereinafter, also referred to as a rear side with respect to the straight line) in the top view of the vehicle 100. When a collision occurs in the vehicle 100 and the electric unit 10 or the ePT 2 is pushed by a collision object (barrier), the electric unit 10 or the ePT 2 moves backward while performing yaw rotation with the first fixing point at which the electric unit 10 is mounted and fixed to the side member 50 as a fulcrum. Accordingly, the case 4 interferes with the side member 50 on the rear side with respect to the straight line L-L connecting the first fixing point and the second fixing point (hereinafter, also referred to as a straight line connecting the fixing points). Therefore, during a collision of the vehicle 100, since the reinforcing portion 44 is provided at a part of the case 4 on the rear side with respect to the straight line connecting the fixing points, which is a part that is likely to interfere with the side member 50, it is possible to suppress damage or the like to the case 4. Since the reinforcing portion 44 only needs to be provided at a part on the rear side with respect to the straight line connecting the fixing points, space saving can be achieved, and the vehicle body crushing stroke and the clearance can be ensured.

Hereinafter, the reinforcing portion 44 will be described in detail.

FIG. 3 is a diagram illustrating an installation position of the reinforcing portion 44. The reinforcing portion 44 is provided at a placed indicated by X in FIG. 3.

As described above, in the present embodiment, the case 4 is provided with the reinforcing portion 44 having enhanced rigidity. As illustrated in FIG. 3, the reinforcing portion 44 is provided on the rear side in the top view of the vehicle 100 with respect to the straight line L-L connecting the first fixing point 13 at which the electric unit 10 is mounted and fixed to the side member 50 and the second fixing point 14 at which the electric unit 10 is mounted and fixed to the suspension member 60 (the straight line connecting the fixing points). Details of the fixing points 13 and 14 will be described below.

More specifically, the reinforcing portion 44 is provided at a corner portion of the case 4 closer to the side member 50 on the rear side than the straight line L-L connecting the first fixing point 13 and the second fixing point 14. However, the present invention is not limited thereto, and the reinforcing portion 44 may be provided at any position on the rear side with respect to the straight line connecting the fixing points.

Here, when a collision occurs and a load is applied to the vehicle 100, a part having low rigidity will be crushed and deformed. The first mount fixing portion 11 is a part that has a function of suppressing vibration caused by the motor, and thus has relatively high rigidity. During a collision of the vehicle 100, in particular, in a case of a collision offset to the right side of the vehicle 100, when the electric unit 10 is pushed by a collision object (barrier), the mount member of the second mount fixing portion 12 close to the collision place is easily broken, but the mount member of the first mount fixing portion 11 moves backward while performing yaw rotation around the first fixing point 13 in a state in which the mount fixing is maintained. As a result, a part of the electric unit 10 (case 4) on the rear side with respect to the straight line connecting the fixing points interferes with the side member 50. Since the side member 50 is formed of a member having high strength such as an iron plate, the case 4 may be damaged when the side member 50 interferes with the case 4. In this regard, in the present embodiment, since the case 4 is provided with the reinforcing portion 44 having enhanced rigidity at the part on the rear side with respect to the straight line connecting the fixing points, damage or the like to the case 4 during a collision of the vehicle 100 is suppressed.

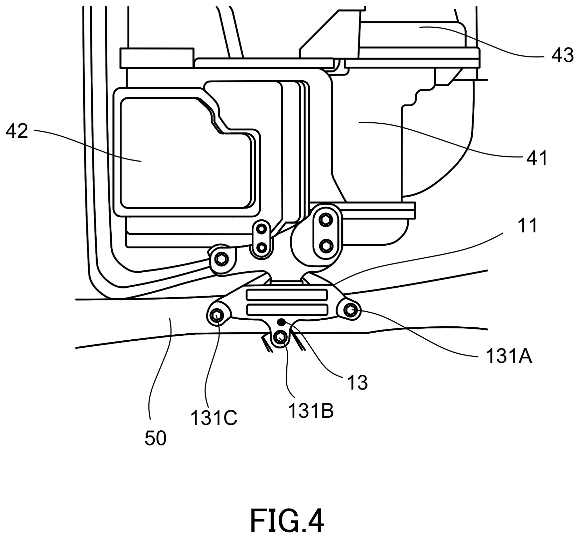

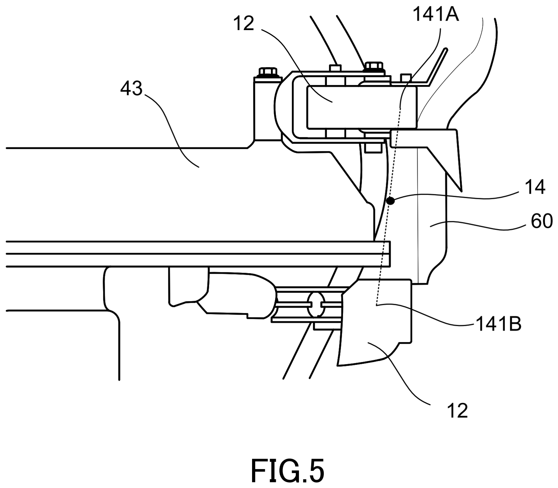

FIG. 4 is a top view of the first mount fixing portion 11 that mounts and fixes the electric unit 10 to the side member 50, and FIG. 5 is a top view of the second mount fixing portion 12 that mounts and fixes the electric unit 10 to the suspension member 60. Note that FIG. 5 is a diagram illustrating a state in which the motor housing 41 is not fastened to the gear box housing 43.

As illustrated in FIG. 4, the mount member of the first mount fixing portion 11 is fastened to the side member 50 at three points (131A, 131B, 131C). As illustrated in FIG. 5, two mount members of the second mount fixing portion 12 are fastened to the suspension 102. That is, the mount members of the second mount fixing portion 12 are fastened to the suspension member 60 at two points (141A, 141B).

Here, in a case where the mount members of the mount fixing portions 11 and 12 that mount and fix the electric unit 10 to the vehicle body are fastened to the side member 50 and the suspension member 60 at one point respectively, the fastening points can be used as the fixing points. On the other hand, when the mount member is fastened to the side member 50 or the suspension member 60 at a plurality of points, a center of gravity of the plurality of points can be regarded as a representative point and regarded as a fixing point at which the electric unit 10 is mounted and fixed to the vehicle body. When the mount member is fastened to the side member 50 or the suspension member 60 at two points, a midpoint between the two points can be regarded as a representative point and regarded as a fixing point at which the electric unit 10 is mounted and fixed to the vehicle body. In the present embodiment, since the mount member of the first mount fixing portion 11 is fastened to the side member 50 at three points (131A, 131B, 131C), a center of gravity of the three points (131A, 131B, 131C) is set as the first fixing point 13. Since the mount member of the second mount fixing portion 12 is fastened to the suspension member 60 at two points (141A, 141B), a midpoint between the two points (141A, 141B) is set as the second fixing point 14. In a case where the space cannot be ensured, the mount member of the mount fixing portion may be divided into a plurality of portions and provided as the second mount fixing portion 12 of the present embodiment.

Note that in the present embodiment, the mount member of the first mount fixing portion 11 is fastened to the side member 50 at three points (131A, 131B, 131C), and the mount member of the second mount fixing portion 12 is fastened to the suspension member 60 at two points (141A, 141B). The number of fastening points at which the mount members are fastened to the side member 50 and the suspension member 60 can be freely determined.

Further, in the present embodiment, one fixing portion for fixing the electric unit 10 to each of the side member 50 and the suspension member 60 is set, but a plurality of fixing portions for fixing the electric unit 10 to the side member 50 and the suspension member 60 may be set. In this case, the reinforcing portion 44 is provided on the rear side in the top view of the vehicle 100 with respect to a straight line connecting a fixing point in a fixing portion interposed between the electric motor 21 and the side member 50 and a fixing point in a fixing portion interposed between the gear box 3 and the suspension member 60. That is, the fixing point set between the electric motor 21 and the side member 50 is the first fixing point 13, and the fixing point set between the gear box 3 and the suspension member 60 is the second fixing point 14.

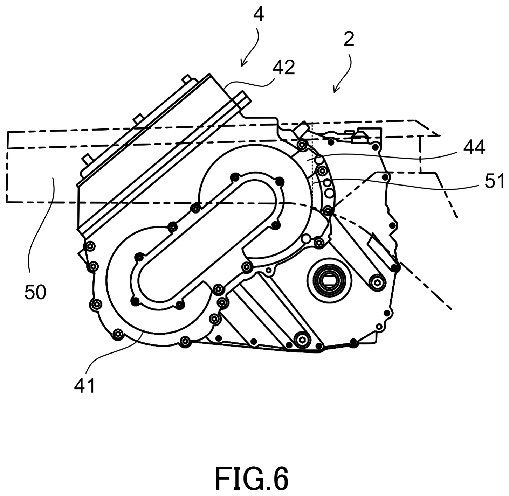

FIG. 6 is a diagram illustrating a positional relation between the side member 50 and the reinforcing portion 44, and is a left side view of the case 4. In FIG. 6, positions of the side member 50 in a height direction and a front-rear direction of the electric vehicle 100 is indicated by broken lines.

The side member 50 has different thicknesses, material strengths, and the like in the front-rear direction of the vehicle 100 with a boundary portion 51 as a boundary. That is, the side member 50 has two different types of rigidity in the front-rear direction of the vehicle 100.

As illustrated in FIG. 6, the reinforcing portion 44 is provided at a position overlapping the side member 50 of the vehicle 100 in the height direction of the vehicle 100. Accordingly, even when the case 4 interferes with the side member 50 due to a collision or the like of the vehicle 100, the side member 50 interferes with a part provided with the reinforcing portion 44 having enhanced rigidity. That is, it is possible to prevent the side member 50 from interfering with a part having low strength and damaging the case 4.

The reinforcing portion 44 is provided at a position overlapping the boundary portion 51 where the rigidity of the side member 50 changes in a side view of the vehicle 100. When a collision occurs in the vehicle 100 and a load is applied, the side member 50 is easily bent at the boundary portion 51 where the rigidity changes. That is, since the boundary portion 51 becomes a bending point and an edge during collision, when the case 4 interferes with the boundary portion 51 (edge) of the side member 50 during collision, stress generated in the interfering part increases, and the case 4 is easily damaged. Therefore, by providing the reinforcing portion 44 at a position overlapping the boundary portion 51 of the side member 50 in a side view of the vehicle 100, even when the case 4 interferes with the side member 50 during a collision of the vehicle 100, the boundary portion 51 (edge) of the side member 50 interferes with the part provided with the reinforcing portion 44. Therefore, damage to the case 4 can be suppressed.

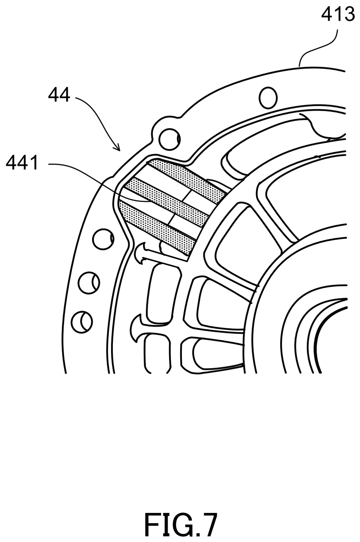

FIG. 7 is a partially enlarged view of the rear cover 413 in the motor housing 41 constituting a part of the case 4, and is a diagram illustrating an inner side of the rear cover 413.

As illustrated in FIG. 7, the inner side of the rear cover 413 is formed in a beehive shape. A member in a rib shape (hereinafter, referred to as a rib) 441 is provided on an inner side of the rear cover 413, and rigidity is enhanced in a part provided with the rib 441. That is, the reinforcing portion 44 of the case 4 is formed by the rib 441 provided on the rear cover 413. Therefore, when the rear cover 413 is fastened to the outer housing 412, the rib 441 is provided at a position on the rear side with respect to the straight line connecting the fixing points. In this way, since the reinforcing portion 44 is provided in a rib shape inside the case 4, it is not necessary to ensure a space for providing the reinforcing portion 44 outside the case 4. Therefore, it is possible to further save the space of the case 4, and it is possible to suppress damage or the like to the case 4 during a collision of the vehicle 100 while ensuring the vehicle body crushing stroke and the clearance.

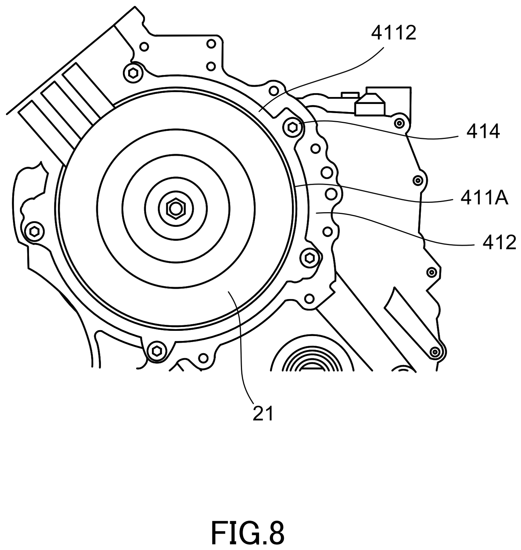

FIG. 8 is a partially enlarged view of the electric unit 10 (ePT 2) before the rear cover 413 is fastened, and is a side view of a portion where the electric motor 21 is housed in the motor housing 41. FIG. 9 is a partially enlarged view of the electric unit 10 (ePT 2) after the rear cover 413 is fastened, and is a side view of the portion where the electric motor 21 is housed in the motor housing 41.

As illustrated in FIG. 8, the first inner housing 411A that houses the electric motor 21 has a flange portion 4112 formed on an outer side of a peripheral edge thereof, and is fastened to the outer housing 412 by a bolt or the like at a plurality of places in the flange portion 4112.

The rib 441 (reinforcing portion 44) is provided on the inner side of the rear cover 413 at a position on the rear side with respect to a straight line connecting the fixing points and at a position (position indicated by Y in FIG. 9) facing the fastening portion 414 where the first inner housing 411A and the outer housing 412 are fastened to each other. In this way, by providing the reinforcing portion 44 at a position facing the fastening portion 414, strength of the bolt or the like that fasten the first inner housing 411A and the outer housing 412 also contributes to the rigidity of the reinforcing portion 44. That is, the rigidity of the reinforcing portion 44 can be further enhanced, and damage to the case 4 during a collision of the vehicle 100 can be further suppressed.

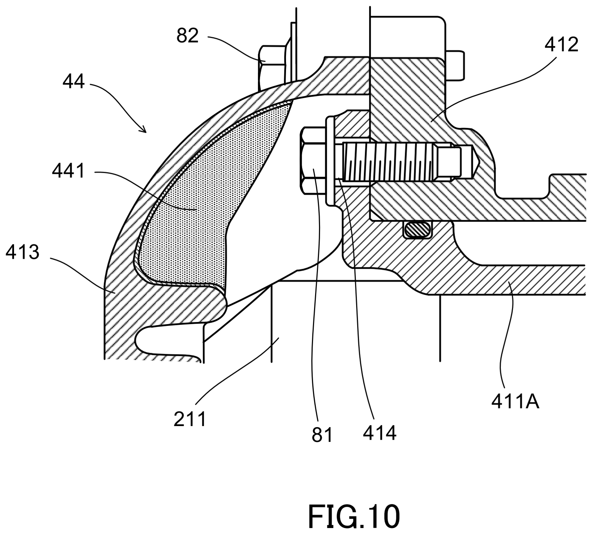

FIG. 10 is a cross-sectional view of a periphery of the fastening portion 414 between the first inner housing 411A that houses the electric motor 21 and the outer housing 412, and is a diagram as viewed from the rear side of the vehicle 100.

As illustrated in FIG. 10, in the fastening portion 414, the first inner housing 411A and the outer housing 412 are fastened by a bolt 81. The outer housing 412 and the rear cover 413 are fastened by a bolt 82, and the rib 441 constituting the reinforcing portion 44 are provided at a position facing the bolt 81 on the inner side of the rear cover 413. On an inner side of an inner peripheral surface of the first inner housing 411A, there is a high-voltage part 211 of the electric motor 21.

In this way, by providing the reinforcing portion 44 at the position facing the bolt 81 of the fastening portion 414, the strength of the bolt 81 also contributes to the rigidity of the reinforcing portion 44 as described above. Since the fastening portion 414 has a tap portion for the bolt 81, a thickness corresponding to a depth of the hole is required, and the rigidity in an insertion direction of the bolt 81 is ensured. Therefore, the rigidity of the reinforcing portion 44 is substantially enhanced, and damage to the case 4 during a collision of the vehicle 100 can be further suppressed.

Further, since the rib 441 is provided at the position facing the bolt 81 of the fastening portion 414, even when the case 4 is broken during a collision of the vehicle 100, a finger is difficult to enter the inside of the case 4 (motor housing 41) because of the rib 441, so that electric shock to a driver or the like can be prevented. Note that preferably, the rib 441 is configured to have a shape with fine rib holes with a pitch narrower than that of a human finger, for example. Accordingly, when the case 4 is broken, it is possible to further prevent a finger from entering the inside of the case 4 (motor housing 41) and further prevent the electric shock.

According to the electric vehicle 100 of the above-described embodiment, the following effects can be obtained.

In the electric vehicle 100, the electric unit 10 including the electric motor (electric motor) 21 and the case 4 housing the electric motor (electric motor) 21 is mounted and fixed to the vehicle body at a plurality of fixing points. The plurality of fixing points include the first fixing point 13 set on the side member 50 positioned on the side surface side of the electric vehicle 100 with respect to the electric unit 10, and the second fixing point 14 set on the suspension member 60 positioned on the rear side of the electric vehicle 100. In addition, the case 4 is provided with the reinforcing portion 44 having enhanced rigidity at a part on the rear side of the electric vehicle 100 with respect to the straight line L-L connecting the first fixing point 13 and the second fixing point 14 in a top view of the electric vehicle 100. Accordingly, even when the electric unit 10 is pushed by a collision object (barrier) and moves backward while performing yaw rotation around the first fixing point 13 during a collision of the vehicle 100, the side member 50 interferes with the part of the case 4 provided with the reinforcing portion 44 having enhanced rigidity. Therefore, damage or breakage of the case 4 during a collision of the electric vehicle 100 is suppressed. Since the reinforcing portion 44 only needs to be provided at the part on the rear side with respect to the straight line connecting the fixing points, the space of the case 4 can be saved, and the vehicle body crushing stroke and the clearance can be ensured.

In the electric vehicle 100, the reinforcing portion 44 of the case 4 is provided at a position overlapping the side member 50 in the height direction of the electric vehicle 100. Accordingly, even when the case 4 interferes with the side member 50 due to a collision or the like of the vehicle 100, the side member 50 interferes with the part provided with the reinforcing portion 44 having enhanced rigidity. Therefore, it is possible to suppress damage or the like to the case 4 during a collision or the like of the electric vehicle 100.

In the electric vehicle 100, the side member 50 has two types of rigidity in the front-rear direction of the electric vehicle 100, and the reinforcing portion 44 of the case 4 is provided at a position overlapping the boundary portion 51 where the rigidity of the side member 50 changes. As a result, even when a collision occurs in the electric vehicle 100 and the boundary portion 51 of the side member 50 is bent and becomes an edge, the boundary portion 51 (edge) interferes with the part provided with the reinforcing portion 44 having enhanced rigidity, so that damage to the case 4 can be further suppressed.

In the electric vehicle 100, the reinforcing portion 44 is provided in a rib shape inside the case 4. Therefore, it is not necessary to ensure a space for providing the reinforcing portion 44 outside the case 4, so that it is possible to further save the space of the case 4. That is, it is possible to suppress damage or the like to the case 4 during a collision of the electric vehicle 100 while ensuring the vehicle body crushing stroke and the clearance.

In the electric vehicle 100, the rib-shaped reinforcing portion 44 is provided at a position facing the fastening portion 414 between the inner housing 411 and the outer housing 412 in the rear cover 413. Accordingly, since the strength of the bolt or the like that fastens the inner housing 411 and the outer housing 412 also contributes to the rigidity of the reinforcing portion 44, it is possible to further suppress damage or the like to the case 4 during a collision of the electric vehicle 100. Since the fastening portion 414 needs to have a thickness corresponding to the depth of a hole into which a bolt or the like is inserted, the rigidity of the reinforcing portion 44 is substantially enhanced, and damage to the case 4 during a collision of the vehicle 100 can be further suppressed. Since the rib-shaped reinforcing portion 44 is provided at a position facing the fastening portion 414, even when the case 4 is broken during a collision of the vehicle 100, the reinforcing portion 44 makes it difficult for a finger to enter the inside of the case 4. Therefore, electric shock to the driver or the like can be prevented.

Note that in the present embodiment, the case 4 is constituted by integrating the motor housing 41 that houses the electric motor (electric motor) 21 and the generator 22, the inverter housing 42 that houses the inverter 23, and the gear box housing 43 that houses the gear trains of the gear box 3, but the present invention is not limited thereto. The case 4 may be a housing that houses at least the electric motor (electric motor) 21.

In the present embodiment, the electric motor (electric motor) 21 and the generator 22 of the ePT 2 are integrated with the inverter 23, but the present invention is not limited thereto, and the electric motor (electric motor) 21 and the generator 22 may not be integrated with the inverter 23 as long as the electric motor 21 and the generator 22 are electrically connected to the inverter 23. The ePT 2 may not include the generator 22 like an electric automobile that does not include a generator.

In the present embodiment, the first mount fixing portion 11 (first fixing point 13) mounts and fixes the electric unit 10 to the side member 50 positioned on the left side surface of the electric vehicle 100, but the present invention is not limited thereto. For example, in a region where vehicles travel on a left side of a road, when the vehicle collides with an oncoming vehicle or the like, an offset collision is likely to occur at a position on a left side of a front surface of the vehicle. In this case, since a load is applied to the electric unit 10 from a front left portion of the electric vehicle 100 and the electric unit 10 performs yaw rotation, the electric unit 10 is likely to interfere with the side member 50 positioned on the left side surface of the electric vehicle 100. Therefore, as in the present embodiment, it is preferable to set the first fixing point 13 on the side member 50 positioned on the left side surface of the electric vehicle 100. On the other hand, in a region where vehicles travel on a right side of a road, when the vehicle collides with an oncoming vehicle or the like, an offset collision is likely to occur at a position on a right side of the front surface of the vehicle, and thus the electric unit 10 is likely to interfere with a side member positioned on the right side surface of the electric vehicle 100. Therefore, in such a region, it is preferable to set the first fixing point 13 on the side member positioned on the right side surface of the electric vehicle 100. That is, the side member on which side surface of the electric vehicle 100 the first fixing point 13 is to be set on can be freely determined depending on the region where the electric vehicle 100 is used and the like.

As in the present embodiment, the reinforcing portion 44 is preferably provided at a position overlapping the side member 50 in the height direction of the electric vehicle 100, but the present invention is not necessarily limited thereto. If provided at a part on the rear side with respect to the straight line connecting the fixing points, the reinforcing portion 44 may be provided at a position offset from the side member 50 in the height direction of the electric vehicle 100.

As in the present embodiment, the reinforcing portion 44 is preferably provided at a position overlapping the boundary portion 51 where the rigidity of the side member 50 changes in a side view of the electric vehicle 100, but the present invention is not necessarily limited thereto. If provided at a part on the rear side with respect to the straight line connecting the fixing points, the reinforcing portion 44 may be provided at a position offset from the boundary portion 51 in a side view of the electric vehicle 100.

In the present embodiment, although the side member 50 has two types of rigidity in the front-rear direction of the electric vehicle 100, the present invention is not limited thereto, and the side member 50 may have only one type of rigidity, or may have three or more types of rigidity. Note that, in the case of three or more types of rigidity, the reinforcing portion 44 is preferably provided at a position overlapping any of a plurality of boundary portions where the rigidity of the side member 50 changes in a side view of the electric vehicle 100.

As in the present embodiment, the reinforcing portion 44 is preferably formed in a rib shape inside the case 4 (rear cover 413), but the present invention is not necessarily limited thereto. The reinforcing portion 44 may not have a rib shape and may be provided outside the case 4 as long as the reinforcing portion 44 is provided at a part on the rear side with respect to the straight line connecting the fixing points.

Although the embodiment of the present invention has been described above, the above embodiment merely exemplifies a part of application examples of the present invention and does not intend to limit the technical scope of the present invention to the specific configurations of the above embodiments.

## Claims

1. An electric vehicle, wherein
an electric unit including an electric motor and a case housing the electric motor is mounted and fixed to a vehicle body at a plurality of fixing points,
the fixing points include at least a first fixing point set on a side member positioned on a side surface side of the electric vehicle relative to the electric unit, and a second fixing point set on a suspension member positioned on a rear side of the electric vehicle relative to the electric unit, and
the case is provided with a reinforcing portion having enhanced rigidity at a part on a rear side of the electric vehicle relative to a straight line connecting the first fixing point and the second fixing point in a top view of the electric vehicle.

2. The electric vehicle according to claim 1, wherein
the reinforcing portion is provided at a position overlapping the side member in a height direction of the electric vehicle.

3. The electric vehicle according to claim 2, wherein
the side member has at least two types of rigidity in a front-rear direction of the electric vehicle, and
the reinforcing portion is provided at a position overlapping a boundary portion where the rigidity of the side member changes in a side view of the electric vehicle.

4. The electric vehicle according to claim 1, wherein
the reinforcing portion is provided in a rib shape on an inner side of the case.

5. The electric vehicle according to claim 4, wherein
the case includes an outer housing, a cylindrical inner housing that is housed inside the outer housing and fastened to the outer housing, and a rear cover that covers an opening of the inner housing, and
the reinforcing portion is provided at a position on the rear cover facing a fastening portion between the inner housing and the outer housing.
